# EUROPEAN PATENT SPECIFICATION

(11) **EP 0 686 550 B1**
(45) Date of publication and mention of the grant of the patent: **05.08.1998**
(21) Application number: 95107982.1
(22) Date of filing: 24.05.1995
(51) Int. Cl.: B62M 23/02, B60K 1/04, B60S 5/06

(54) **Battery mounting-removing structure of motor-assisted bicycle**
Anordnung zum Ein- und Ausbau von Batterien in Fahrrädern mit Hilfsmotor
Disposition pour le montage et le démontage de batterie de bicyclette avec moteur auxiliaire

(30) Priority: 11.06.1994 JP 152726/94
(43) Date of publication of application: 13.12.1995
(73) Proprietor: HONDA GIKEN KOGYO KABUSHIKI KAISHA, Minato-ku Tokyo (JP)
(72) Inventor: Iseno, Mitsuru, c/o K.K., Wako-shi, Saitama (JP); Yamaguchi, Masaaki, c/o K.K., Wako-shi, Saitama (JP)
(74) Representative: Liska, Horst, Dr.-Ing.

(56) References cited:
- EP-A- 0 561 268
- US-A- 4 044 852

## Description

### Detailed Description of the Invention

### Industrial Field of Utilization

The present invention relates to a battery mounting-removing structure by which a battery for assisting human-power propelling of a motor-assisted bicycle by utilizing a power of a motor mounted on a vehicle body can be mounted to, and removed from, the bicycle.

### Prior Art

In a conventional motor-assisted bicycle, a motor is connected to a power transmission system which transmits a pedal force to a rear wheel and also is mounted with a battery, from which the electric power is supplied by a control device when the pedal force has exceeded a predetermined value, thereby assisting the human-power operation.

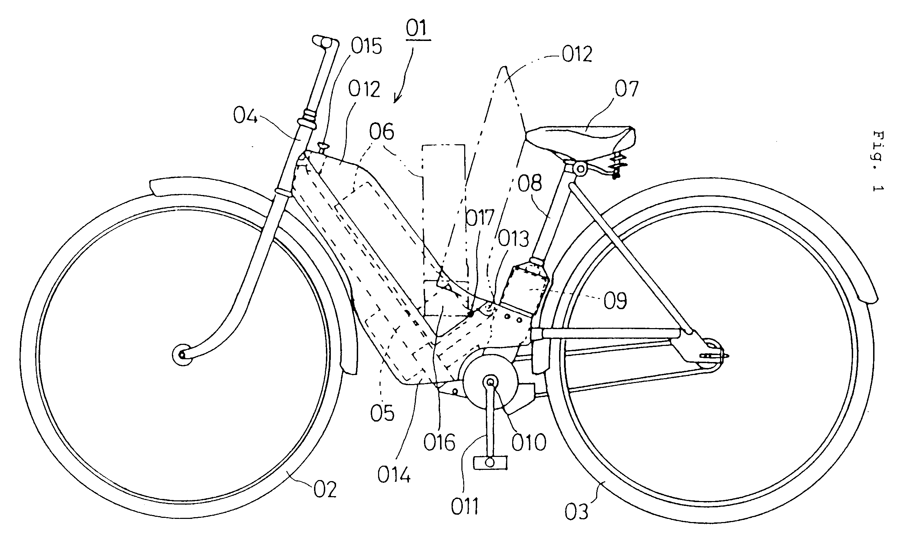

In a power-assisted bicycle 01 according to the preamble of claim 1 and described in Japanese Patent Laid-open Gazette No. Hei 5-319104 illustrated in Fig. 1, a long battery case 06 is arranged between front and rear wheels 02 and 03 along a downtube 05 which is inclined obliquely downward to the rear from a head pipe 04 of a main frame having a V-shape in a side view; a motor 09 is mounted on a seat tube 08 extending to a seat 07; at the lowermost end of the V-shaped main frame is rotatably pivoted a crankshaft 010 to give assistance to the pedal force of a pedal crank 011 protrusively mounted on the crankshaft 010; and a transmission gear mechanism is mounted to reduce the rotation of the motor 09 to transmit the power coming through the crankshaft 010.

An armor cover 012 for covering the battery case 06 is pivotally attached to a side cover 014 so that it may vertically openably swing on the center of a pivot shaft 013 at the lower rear end and is designed to be locked in a hermetical condition by means of a locking device 015 provided at the upper front end of the armor cover 012.

Furthermore, at the lower end of the battery case 06 is releasably mounted a support box 016, which is pivotally supported on the side cover 014 to vertically swing on the center of a pivot shaft 017; after the armor cover 012 is opened upward, the battery case 06 and the support box 016 are swung upward, so that the battery case 06 can be removed from the vehicle body from the support box 016.

### Problem to be Solved by the Invention

In the motor-assisted bicycle 01 described in Japanese Patent Laid-Open Gazette No. Hei 5-319104 illustrated in Fig. 1, the armor cover 012 must be opened and closed after unlocking the locking device 015, prior to the removal of the battery case 06 from, and installation to, the motor-assisted bicycle 01. The work to mount and remove the battery case 06 becomes complicated. Besides the armor cover 012, the support box 016, and the pivot shafts 013 and 016 are needed in addition to the battery case 06. This requires an increased number of parts and making it difficult to reduce weight and cost.

### Means for Solving the Problem, Function and Effect

The present invention relates to improvements in the battery mounting-removing structure of a motor-assisted bicycle that has overcome the above-described difficulty. The motor-assisted bicycle using the power of a motor which is driven by an electric power from a battery mounted on the vehicle for the purpose of assisting human power is provided with a body cover so formed as to enclose other than the upper portion of a downtube which is inclined obliquely downward to the rear from a head pipe; a battery case releasably fitted in the upper opening portion of the body cover and having a long square cylindrical form; a guide locking member integrally provided in the vicinity of a curved portion of a main frame which is positioned in the vicinity of the lower end of the upper opening portion of the body cover, and includes the downtube and the seat tube curved obliquely upward to the rear from the bottom end of the downtube; an engaging member integrally provided at the lower end of the battery case; and an engaging-disengaging mechanism for releasably connecting the upper end portion of the battery case to the downtube, in the vicinity of the top end of the downtube, wherein an upper case of the battery case constitutes a part of the outside surface of the body of the motor-assisted bicycle, according to claim 1.

Since the present invention is constituted as described above, the engaging member located at the lower end of the battery case can be removed from the U-bent locking piece of the guide locking member in the curved portion of the main frame and the battery case can easily be removed by detaching the engaging-disengaging mechanism disposed in the vicinity of the top end of the downtube and by moving and then raising the upper end of the battery case backward.

Since no vehicle body cover is present above and on both sides of the battery case, battery case mounting and removing procedures are simplified and in addition the number of parts is decreased, allowing a substantial reduction of cost.

In the present invention, with the battery mounting-removing structure removed from the aforesaid motor-assisted bicycle and by holding the upper portion of the perpendicularly directed battery case, the engaging member at the lower end of the battery case is placed on the upper edge of the guide member of the guide locking member in the curved portion of the main frame; and then after the engaging piece is moved toward the rear into engagement with the U-bent locking piece of the guide locking member, the battery case is swung forward on the center of the engagement member at the lower end of the battery case. Then, the engaging-disengaging mechanism in the vicinity of the top end of the downtube is engaged, thus facilitating the mounting of the battery case to the upper opening portion of the body cover.

Furthermore in the present invention, since the long square cylindrical battery case is releasably fitted in the upper opening portion of the body cover, neither a means for holding the battery case nor a supporting member for pivotally supporting them is needed; it is, therefore, possible to decrease the number of parts and to promote substantial reduction of cost and weight.

### Brief Description of the Drawings

Fig. 1 is a side view of a conventional motor-assisted bicycle.

Fig. 2 is a side view of a motor-assisted bicycle of the present invention having a battery mounting-removing structure.

Fig. 3 is a side view with an enlarged major portion of Fig. 2.

Fig. 4 is a side view with an enlarged major portion with a battery case suspended in Fig. 3.

Fig. 5 is an exploded perspective view of a side cover and a center cover.

Fig. 6 is an exploded side view of the battery case.

Fig. 7 is a transverse front view taken along line VII-VII of Fig. 3.

Fig. 8 is a side view of a guide locking member.

Fig. 9 is a view on arrows IX-IX of Fig. 8.

Fig. 10 is a view on arrows X-X of Fig. 8.

Fig. 11 is a longitudinal sectional side view of the front end portion of the battery case of Fig. 3.

Fig. 12 is a longitudinal sectional side view of the front end portion of the battery case in an unlocked state in Fig. 11.

Fig. 13 is a cross sectional view taken along line XIII-XIII of Fig. 11.

Fig. 14 is a side view of a bracket.

Fig. 15 is a view on arrows XV-XV of Fig. 14.

Fig. 16 is a view on arrows XVI-XVI of Fig. 14.

Fig. 17 is a side view of an engaging-disengaging pawl.

Fig. 18 is a view on arrows XVIII-XVIII of Fig. 17.

Fig. 19 is a view on arrows XIX-XIX of Fig. 17.

Fig. 20 is a longitudinal sectional side view of the rear portion of the battery case in Fig. 2.

Fig. 21 is a view on arrows XX-XX of Fig. 20.

Fig. 22 is a plan view of a discharge connector.

Fig. 23 is a view on arrows XXIII-XXIII of Fig. 22.

Fig. 24 is a sectional view taken along line XXIV-XXIV of Fig. 23.

Fig. 25 is a plan view of a connector of the body cover.

Fig. 26 is a view on arrows XXVI-XXVI of Fig. 25.

Fig. 27 is a cross sectional side view taken along line XXVII-XXVII of Fig. 26.

Fig. 28 is a plan view of the rear portion of the lower case of the battery case.

Fig. 29 is a power source wiring diagram of the above-described embodiment.

Fig. 30 is a longitudinal sectional side view of a major portion of another embodiment.

### Preferred Embodiments

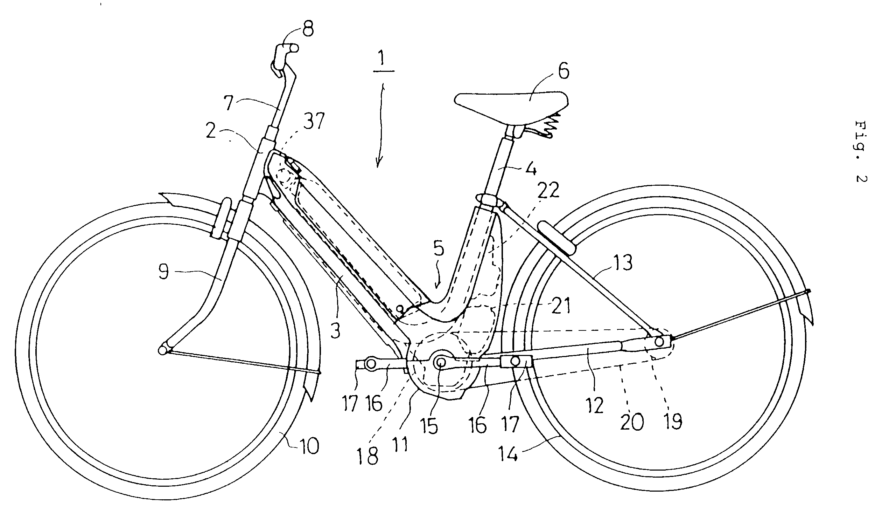

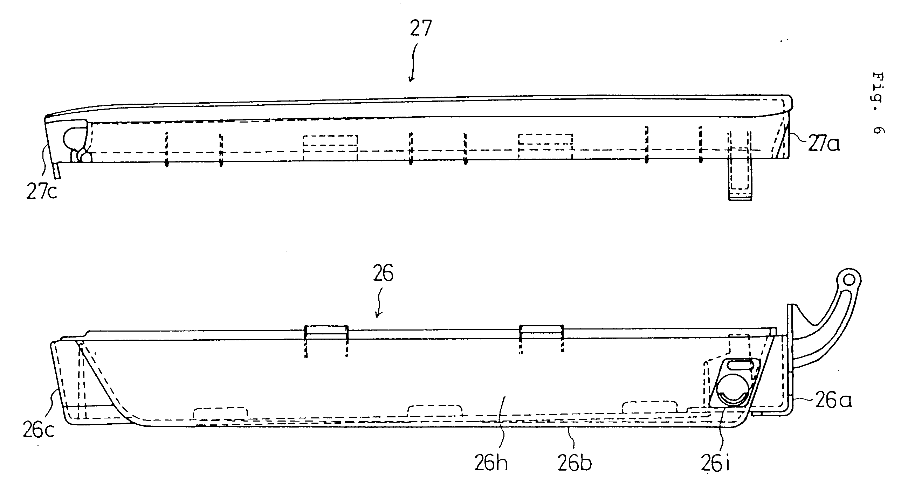

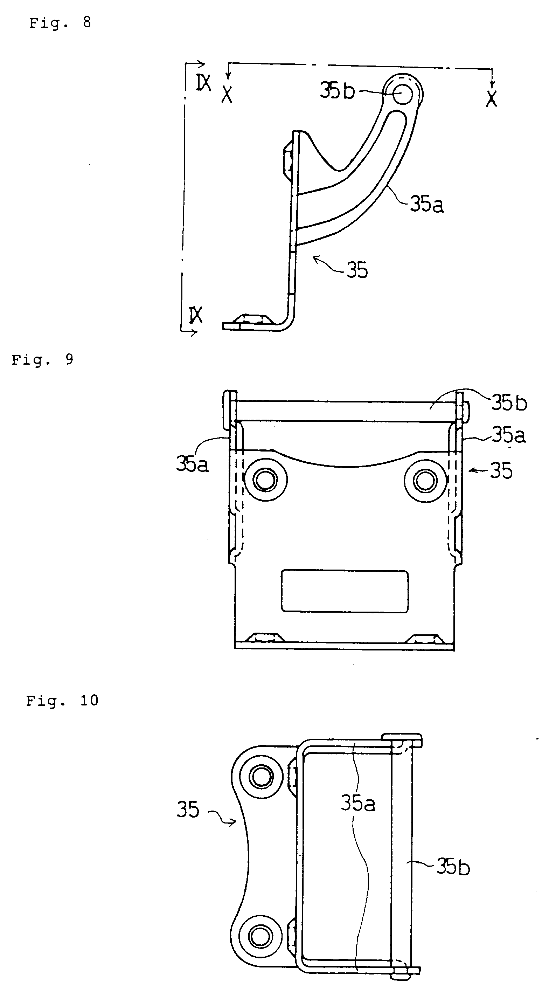

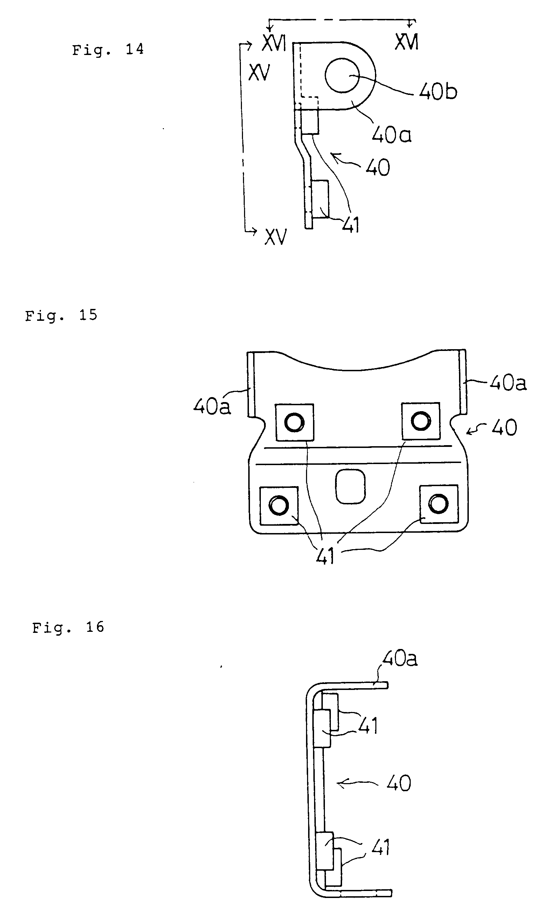

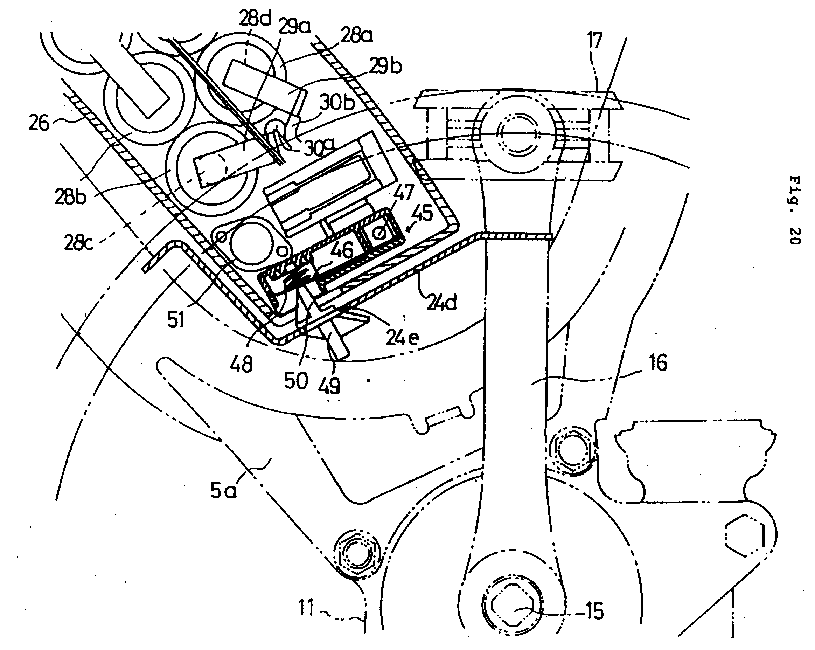

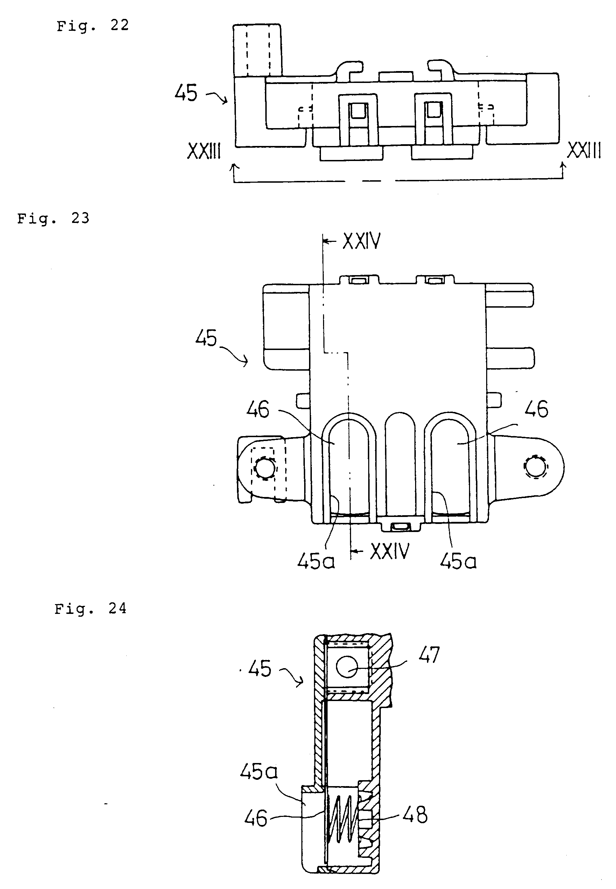

Hereinafter one embodiment of the present invention illustrated in Figs. 2 to 29 will be explained.

A downtube 3 is extended obliquely downward toward the rear from a head pipe 2 of a motor-assisted bicycle 1 and a seat tube 4 is extended obliquely upward toward the rear after being curved upward at the bottom end of the downtube 3, so that the downtube 3 and the seat tube 4 will constitute an approximately V-shaped main frame 5; and a seat 6 is provided at the top end of the seat tube 4.

A steering shaft 7 is rotatably inserted in the head pipe 2 and a steering handle 8 is integrally attached at the top end of the steering shaft 7. And a front wheel 10 is rotatably supported at the bottom end of a pair of right and left front forks 9 integrally projecting downward of the steering shaft 7.

Furthermore, at the curved lower portion of the main frame 5 where the downtube 3 and the seat tube 4 meet is protrusively provided a bracket 5a as shown in Fig. 20, on which a transmission gear mechanism is mounted; and there is also mounted a gear box 11 which serves also as a crankcase integrally with the bracket 5a. To the gear box 11 is integrally attached the front end of the rear fork 12 directed in a longitudinal direction. A stay 13 is provided between the seat tube 4 and the rear end of the rear fork 12, and a rear wheel 14 is rotatably supported on the rear end of the rear fork 12.

Furthermore, as shown in Fig. 2, in the gear box 11 is rotatably fitted a crankshaft 15, on both the right and left ends of which a crank arm 16 is integrally installed. On the forward end of this crank arm 16 is mounted a pedal 17.

Furthermore, an endless chain 20 is mounted between a driving sprocket 18 provided integrally with the crankshaft 15 and a driven sprocket 19. When the crankshaft 15 is driven to turn by the pedal force added to the pedal 17, the rear wheel 14 is turned by way of the driving sprocket 18, the endless chain 20 and the driven sprocket 19, thus enabling the motor-assisted bicycle 1 to run as a bicycle.

Furthermore, a driving motor 21 is secured on the gear box 11 along the seat tube 4, and a control device 22 such as an electronic control unit and a motor driver located above the driving motor 21 for controlling the rotation of the driving motor 21 is mounted on the rear side surface of the seat tube 4. When the rotation of the driving motor 21 is controlled by the control device 22, a torque of the driving motor 21 is transmitted to the crankshaft 15 through the transmission gear mechanism, thus assisting the human power with the power of this driving motor 21.

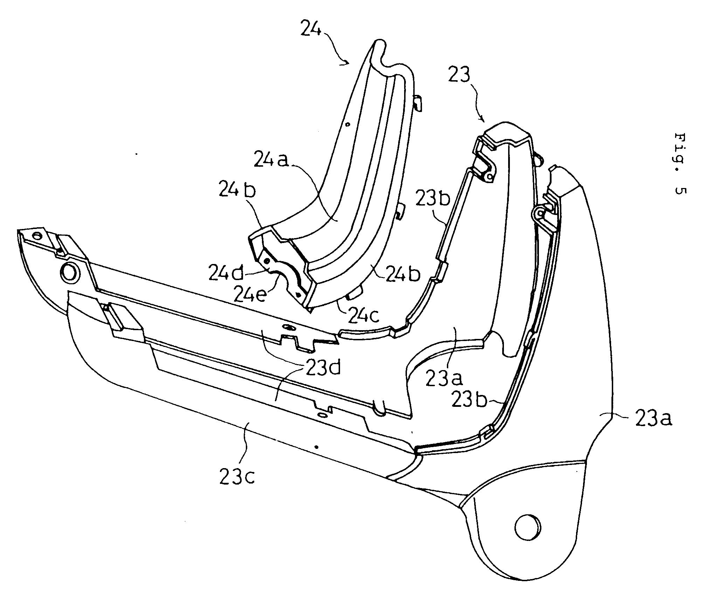

The main frame 5 including the downtube 3 and the seat tube 4 is covered, as shown in Fig. 5, with a side cover 23 which can be split into two halves, right and left, of an approximately V-form, and a center cover 24, so that a long battery case 25 may be removably mounted on the inclined upper surface of the side cover 23 which covers the downtube 3; and an upper case 27 of the battery case 25 constitutes a part of the outside surface of the body of the motor-assisted bicycle 1.

Furthermore, the battery case 25 is dividable into two halves: a lower case 26 and the upper case 27, as illustrated in Figs. 2, 3, 4, 6 and 13. Within the battery case 25 are mounted 20 cylindrical U-l type Ni-Cd batteries 28 in a staggered arrangement, in upper and lower stages, as viewed from the side.

Furthermore, the Ni-Cd batteries 28 are connected in series and, as illustrated in Fig. 20, terminal pieces 29a and 29b connected to the positive and negative electrodes of the Ni-Cd battery 28 at the rear end of the upper stage and the Ni-Cd battery 28 at the rear end of the lower stage are integrally connected with one end of the lead wires 30a and 30b by soldering.

Moreover, on both the right and left sides at the front end of the battery case 25, both ends of the U-shaped handle 32 are rockably attached vertically through a shaft 31.

The center cover 24 is a vertically slender, J-shaped cover as viewed from the side, with its lower portion curved forward as shown in Fig. 5. The center cover 24 has a vertically long ridge formed swelling out forward along the seat tube 4, at the central portion 24a in a lateral direction. The right and left side walls 24b extending on both the right and left sides from the ridge portion 24a is curved rearward and downward, so that its both side end edges 24c may be jointed to the right and left front end edges 23b of the rear wall 23a of the side cover 23.

Furthermore, in the lower portion of the center cover 24 is formed a bottom wall 24d, in order that a rear wall 26a of the lower case 26 of the battery case 25 and the rear wall 27a of the upper case 27 can be contiguously set in parallel with the bottom wall 24d of the center cover 24.

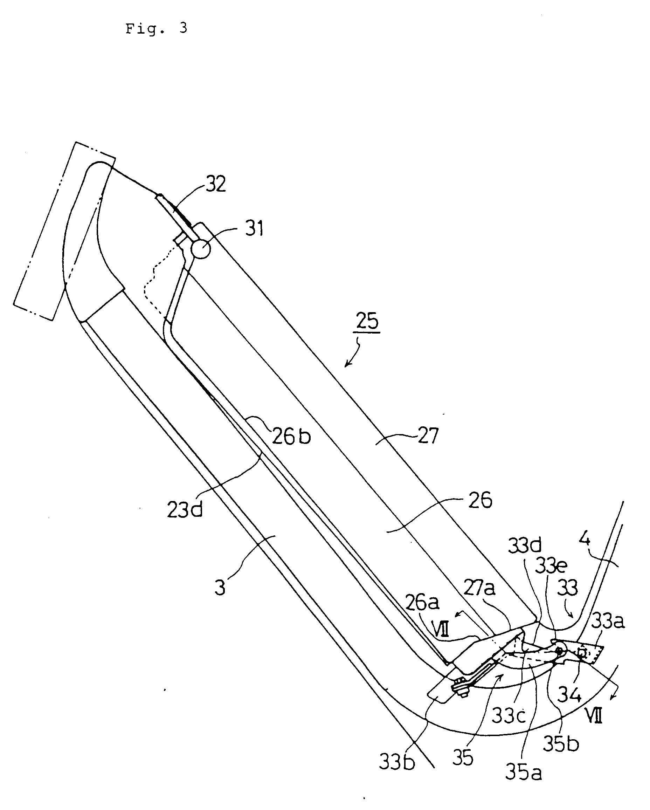

Furthermore, as shown in Figs. 3, 4 and 7, an upper forked end piece 33a of the guide locking member 33 is integrally installed by a bolt 34 to the seat tube 4 adjacently to the curved portion of the main frame 5, and also the lower forked end piece 33b of the guide locking member 33 is integrally installed by welding to the seat tube 4. The guide locking member 33 has a lateral guide piece 33c so formed as to face forward from the upper forked end piece 33a and to direct obliquely upward, and a locking piece 33e smoothly curved upward in a U-shape from the upper-edge base end portion 33d of the lateral guide piece 33c.

Moreover, an engaging member 35 is integrally mounted by a bolt to the rear wall 26a of the lower case 26; the engaging member 35 being provided with a protruding piece 35a located outside of the lateral guide piece 33c of the guide locking member 33 and directly obliquely upward to the rear and an engaging shaft 35b which can be engaged with the locking piece 33e of the guide locking member 33; when the battery case 25 is turned forward and down after the engaging shaft 35b of the engaging member 35 is placed on the lateral guide piece 33c of the guide locking member 33 in such a condition that the battery case 25 is suspended by the U-shaped handle 32, the bottom wall 26b of the lower case 26 of the battery case 25 will become able to be set contiguously to the inward folded portion 23d at the upper end of the front wall 23c of the side cover 23.

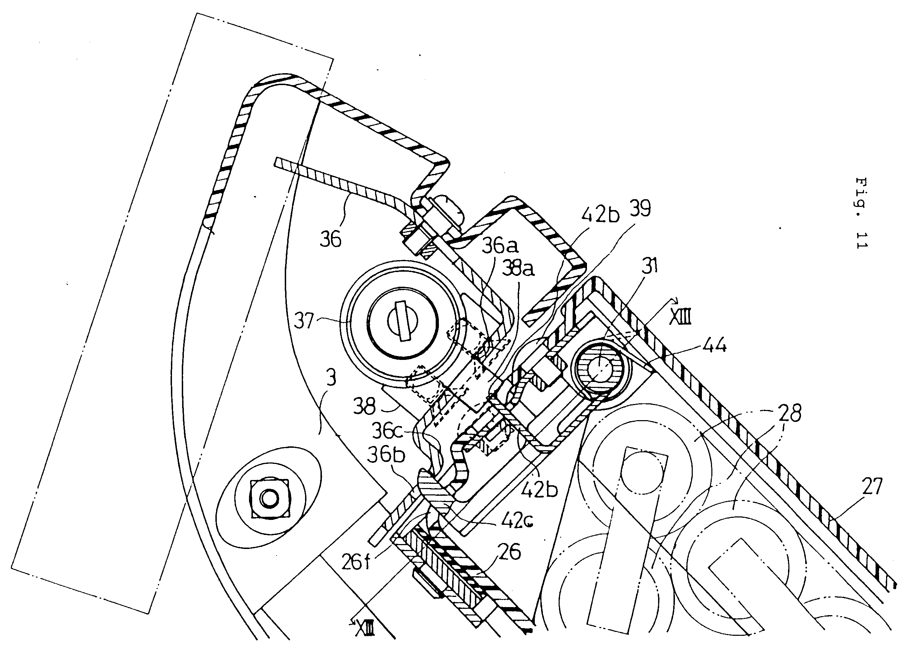

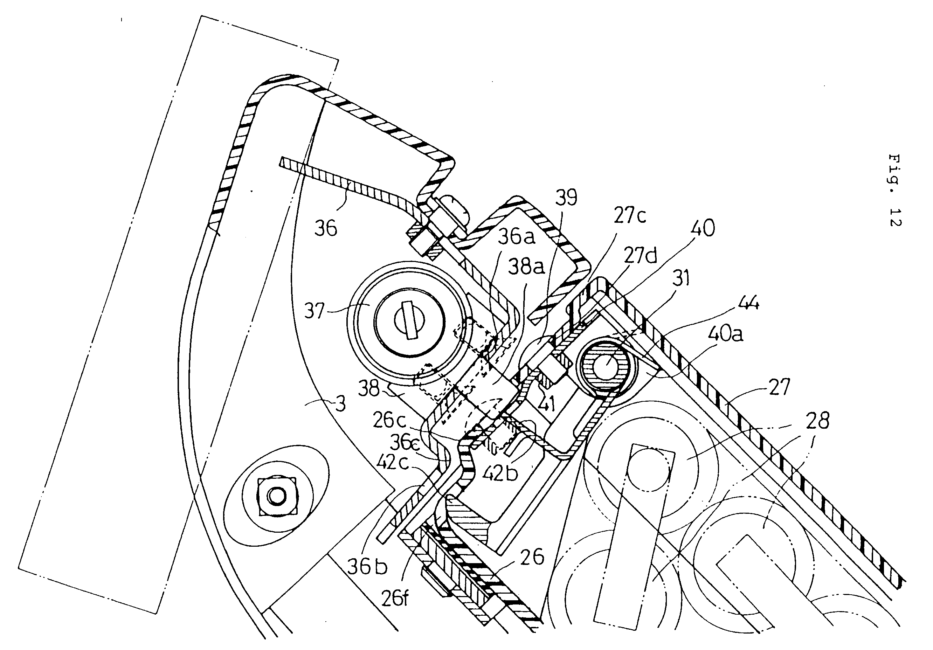

Furthermore as shown in Figs. 11 and 12, there is installed a combination switch 37 on a stay 36 which is integrally connected to the downtube 3 so as to support the front end portion of the front wall 23c of the side cover 23; a locking device 38 (which corresponds to an engaging-disengaging mechanism within the scope of claims) for releasably connecting the battery case 25 to the downtube 3 in connection with the operation of the combination switch 37 is provided contiguously to the combination switch 37, so that when the combination switch 37 is turned to the on or off position, a pin 38a of the locking device 38 retreats in from a pin hole 36a of the stay 36; and when the combination switch 37 is unlocked, the pin 38a of the locking device 38 protrudes out to the rear from the pin hole 36a of the stay 36.

Furthermore, mounting holes 25d and 27d and a pin loose-fit hole 26e are formed in the front walls 26c and 27c of the lower case 26 and the upper case 27 of the battery case 25. And in the front wall 26c of the lower case 26 is formed a pawl loose-fit hole 26f and a male screw 39 inserted through the mounting holes 26d and 27d from outside is threadedly engaged with a female screw 41 of a bracket 40.

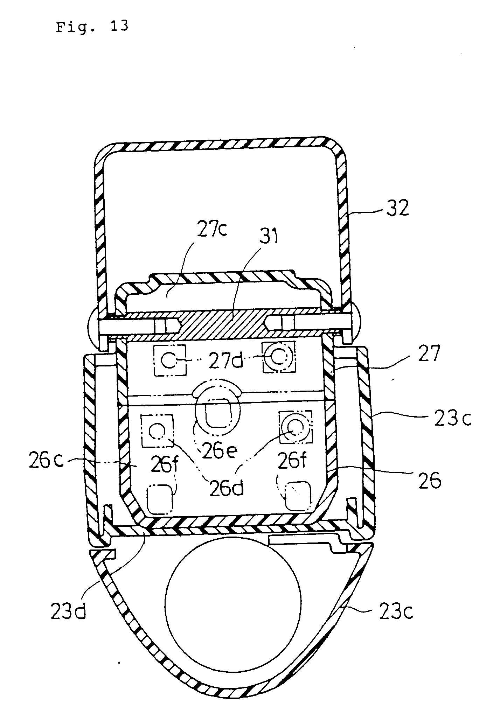

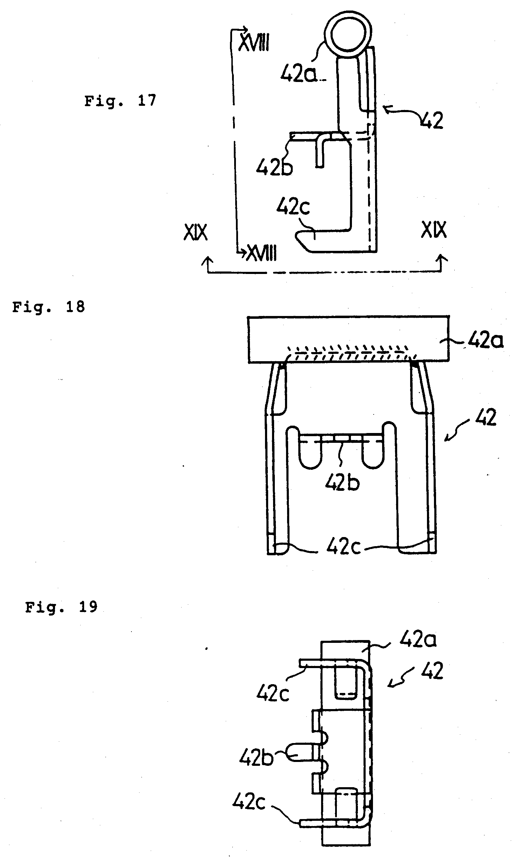

Furthermore, as shown in Figs. 14, 15 and 16, there is formed a hole 40b in a support piece 40a for supporting both sides of the upper portion of the bracket 40. The shaft 31 is inserted into the sleeve portion 42a of the engaging-disengaging pawl 42 and the hole 40b of the bracket 40 shown in Figs. 17, 18 and 19; the engaging-disengaging pawl 42 is provided with a pin receiving piece 42b squarely bent forward at the central portion and a pair of right and left pawl pieces 42c which protrude from the interior to the exterior through the pawl loose-fit hole 26f of the lower case 26 into a pair of right and left locking holes 36b of the stay 36; and further there is provided a coil spring 44 which constantly presses the engaging-disengaging pawl 42 forward to lock the pawl piece 42c in the locking hole 36b of the stay 36.

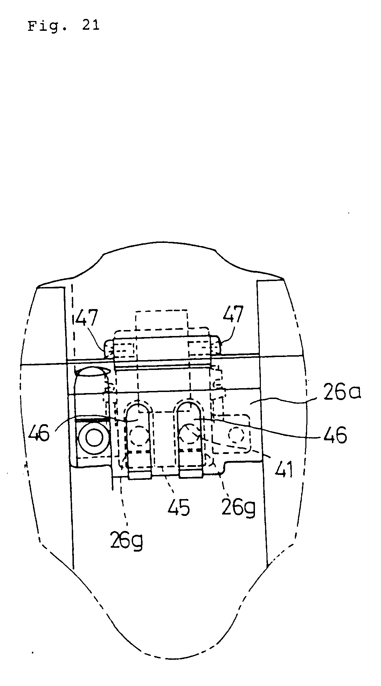

In the rear wall 26a of the lower case 26 are formed a pair of right and left long holes 26g as shown in Fig. 21, and on the inside of the rear wall 26a of the lower case is fixedly mounted a discharge connector 45.

Furthermore, on the discharge connector 45, as shown in Figs. 20, 22, 23 and 24, a pair of right and left contact terminals 46 produced of an elastic copper alloy plate are longitudinally rockably suspended through a screw 47 threadedly installed in the discharge connector 45, and are pressed backward by a spring force of the coil spring 48 interposed between the lower portion of the contact terminal 46 and the discharge connector 45, and also the other end of the lead wire 30 connected with one end of a terminal piece 29 of the Ni-Cd battery 28 is attached to the screw 47.

Furthermore, to the rear of the lower portion of the pair of contact terminals 46 are formed openings 45a in the discharge connector 45 in positions corresponding to a pair of long holes 26g in the lower case 26 of the battery case 25.

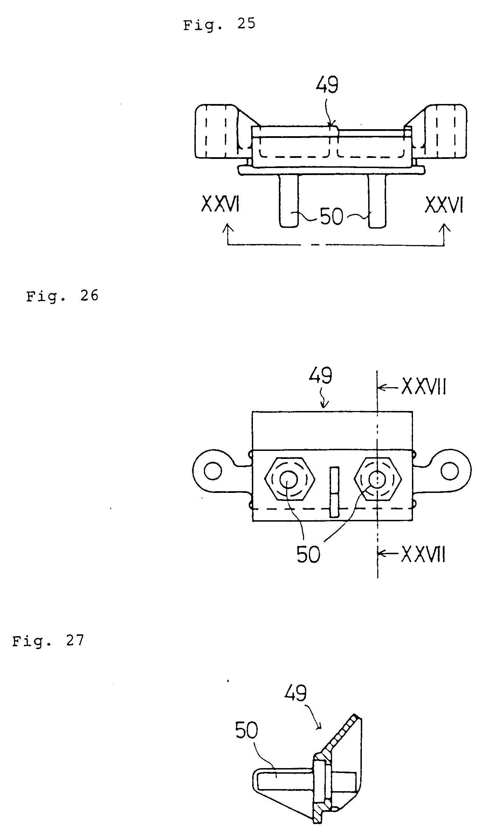

Furthermore, as shown in Fig. 5, a connector 49 shown in Figs. 25 to 27 is inserted in a cutout 24e formed in the bottom wall 24d of the center cover 24. With this connector 49 are integrally fitted a pair of right and left rod-like terminals 50 in a forward protruding state. The terminals 50 are designed to contact a pair of contact terminals 46 on the lower case 26 of the battery case 25.

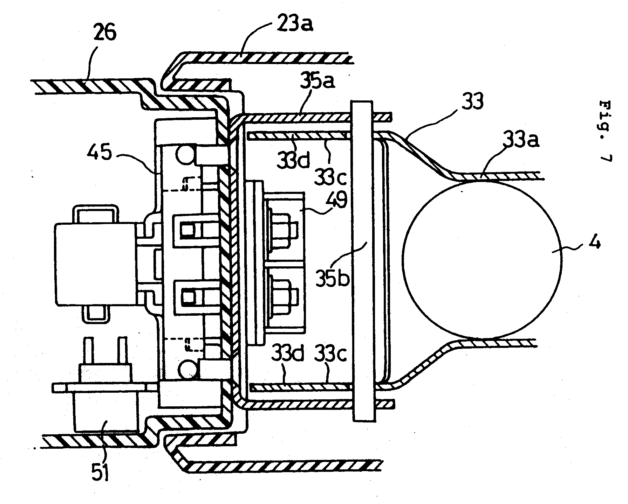

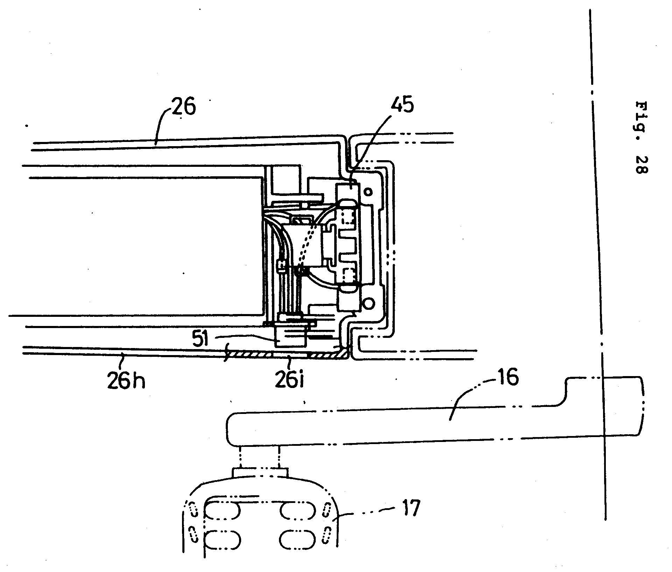

Furthermore, as shown in Fig. 28, an opening 26i is formed in the rear portion of the side wall 26h of the lower case 26; and in a position corresponding to this opening 26i is provided a charging plug 51 shown in Figs. 7 and 20.

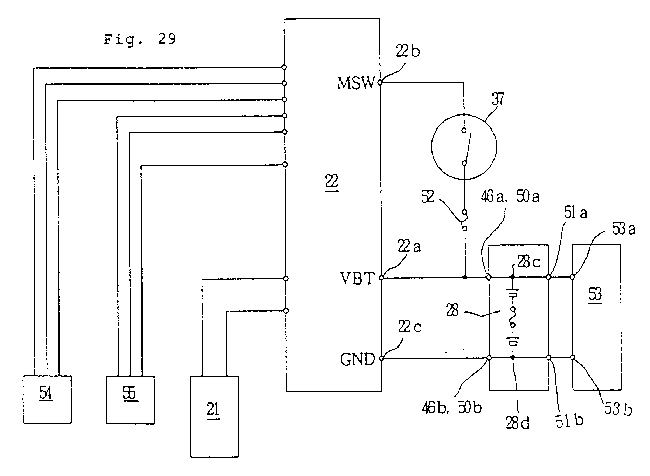

Furthermore, electrical wiring of the driving motor 21, the control device 22 and the Ni-Cd battery 28 in the motor-assisted bicycle 1 is as shown in Fig. 29.

That is, the positive terminal 28c of the Ni-Cd battery 28 is connected to the positive terminal 50a of the connector 49 through the positive contact terminal 46a of the discharge connector 45; the positive terminal 50a being connected to a VBT terminal 22a of the control device 22, also connected to an MSW terminal 22b of the control device 22 through a fuse 52 and the combination switch 37, and further connected to a positive terminal 53a of the charger 53 via the positive terminal 51a of the charging plug 51. Also, the negative terminal 28d of the Ni-Cd battery 28 is connected to a negative terminal 50b of the connector 49 via the negative contact terminal 46b of the negative contact terminal 45b of the discharge connector 45; the negative terminal 50b being connected to a GND terminal 22 of the control device 22 and also connected to a negative terminal 53b of the charger 53 via a negative terminal 51b of the charging plug 51.

Furthermore, to the control device 22 are connected, beside the driving motor 21, a crank sensor 54 and a torque sensor 55.

Since the embodiment illustrated in Figs. 2 to 29 is constituted as described above, in the motor-assisted bicycle 1 mounted with the battery case 25, the pin 38a of the locking device 38, as shown in Fig. 11, withdraws and the engaging-disengaging pawl 42 is moved clockwise by the spring force of the coil spring 44. And since the pawl piece 42 of the engaging-disengaging pawl 41 is locked in the locking hole 36b of the stay 36 and the engaging shaft 35b of the engaging member 35 is engaged with the locking piece 33c of the guide locking member 33, the battery case 25 will never come off from the motor-assisted bicycle 1.

In the state that the battery case 25 is mounted, when the key is inserted into the combination switch 37 and turned to the unlock position, as shown in Fig. 12, the pin 38a of the locking device 38 protrudes out to push the pin receiving piece 42b of the engaging-disengaging pawl 42 into the battery case 25 and the engaging-disengaging pawl 42 is swung counterclockwise on the center of the shaft 43; then the pawl piece 42c of the engaging-disengaging pawl 42 is locked in the locking hole 36b of the stay 36 is released from the locking hole 36b, allowing the front portion of the battery case 25 to swing forward. In this state, when the U-shaped handle 32 is held and pulled upward, the engaging shaft 35b of the engaging member 35 locked by the locking piece 33e of the guide locking member 33 can be removed and accordingly the battery case 25 also can be removed from the motor-assisted bicycle 1.

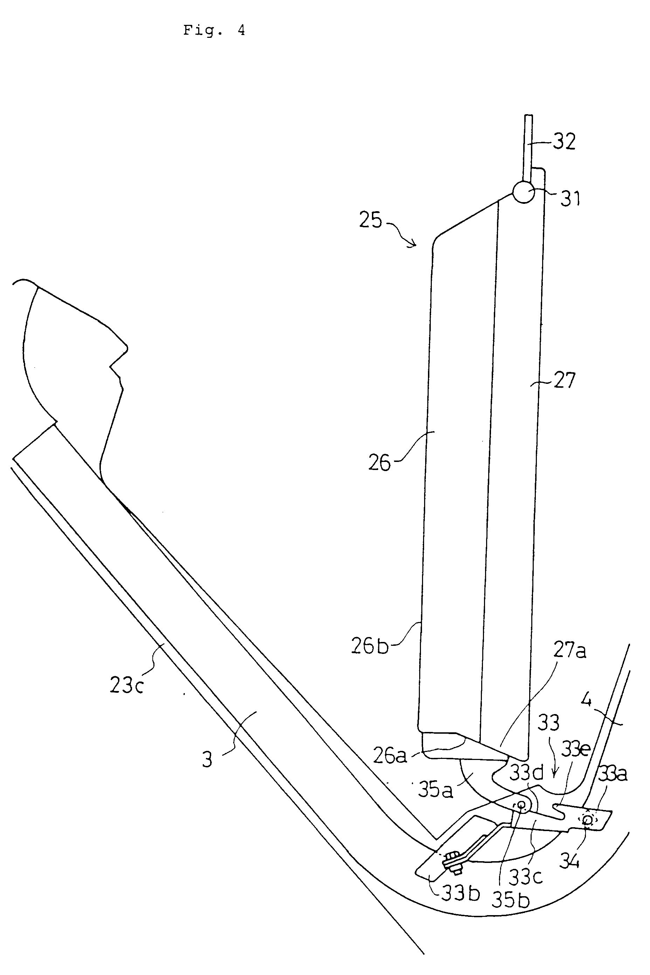

To mount the battery case 25 on the motor-assisted bicycle 1, as shown in Fig. 4, the engaging shaft 35b of the engaging member 35 is placed on the lateral guide piece 33c of the guide locking member 33, with the battery case 25 suspended by the U-shaped handle 32. Then, since the lateral guide piece 33c is inclined obliquely downward to the rear, the engaging shaft 35b of the engaging member 35 slides backward on the upper edge 33d of the lateral guide piece 33c until it is locked by the locking piece 33e of the engaging member 35. Subsequently, the key inserted in the combination switch 37 is turned from the unlock position to the on or off position to withdraw the pin 38a of the locking device 38. In this state, the battery case 25 is turned forward and down until the front portion of the battery case 25 approaches the stay 36 and the locking device 38, and the pawl piece 42c of the engaging-disengaging pawl 42 protruding out from the pawl loose-fit hole 26f of the lower case 26 is pressed by the spring force of the coil spring 44 into contact with the lower curved corner portion 36c of the stay 36, being pushed into the battery case 25. Then, when the pawl piece 42c is properly aligned with the locking hole 36b of the stay 36, the pawl piece 42c is locked in the locking hole 36b of the stay 36 by the spring force of the coil spring 44, thus firmly mounting the battery case 25, which, in this state, is unremovable from the motor-assisted bicycle 1.

In the embodiment illustrated in Figs. 2 to 29, it is possible to mount the battery case 25 to, and remove from, the motor-assisted bicycle 1 quite easily.

Since no vehicle body cover is present above and on both sides of the battery case 25, battery case mounting and removing procedures are simplified and in addition the number of parts is decreased, allowing a substantial reduction of cost.

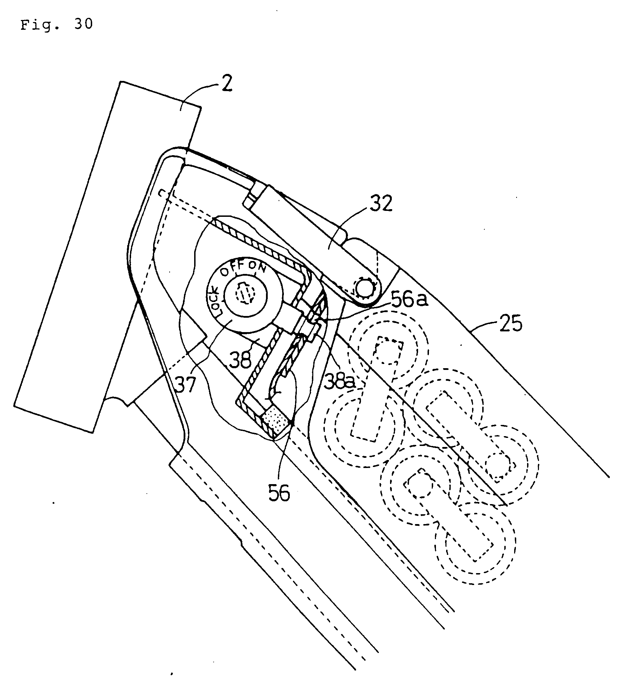

In the embodiment illustrated in Figs. 2 to 29, when the key inserted in the combination switch 37 is turned to the on or off position, the pin 38a of the locking device 38 withdraws until the pawl piece 42c of the engaging-disengaging pawl 42 engages with the locking hole 36b of the stay 36; also when the key is turned to the unlock position, the pin 38a of the locking device 38 protrudes to release the pawl piece 42c of the engaging-disengaging pawl 42 from the locking hole 36b of the stay 36. It is, however, to be understood that, as illustrated in Fig. 30, the pin 38a of the locking device 38 may be locked directly in a pin locking hole 56a of a backing plate 56 attached on the inside surface of the front wall 26c of the lower case 26 of the battery case 25.

Summarized it is an object of the present invention to provide a battery mounting-removing structure which is capable of mounting a battery to, and removing the battery from, a motor-assisted bicycle designed to assist human-power operation by utilizing a power from a motor mounted on a vehicle body.

A forked piece 33a at the upper end of a guide locking member 33 is integrally attached by a bolt 34 to a seat tube 4 located adjacently to the curved portion of a main frame 5, and also a forked piece 33b at the lower end of the guide locking member 33 is integrally attached by welding to the seat tube 4. On the guide locking member 33 are formed a lateral guide piece 33c directed obliquely upward to the front from the forked piece 33a at the upper end and a locking piece 33e which is bent to curve smoothly upward in a U-letter form from the upper-edge base end 33d of the lateral guide piece 33c. On the rear wall 26a of the lower case 26 is integrally mounted an engaging member 35 by a bolt. The engaging member 35 is located on the outer side of the lateral guide piece 33c of the guide locking member 33, and is provided with a projecting piece 35a directed obliquely upward to the rear and an engaging shaft 35b which can be engaged with the engaging piece 33e of the guide locking member 33.

## Claims

1. Motor-assisted bicycle using power from a motor which is driven with an electric power from a vehicle-mounted battery (28) for supplementing human power and having a battery mounting-removing structure comprising:
a body cover (23) so formed as to enclose other than the upper portion of a downtube (3) inclined obliquely rearward and downward;
a battery case (25) releasably fitted in the upper opening portion of said body cover (23) and having an external shape of a long square tube;
a guide locking member (33) located in the vicinity of the bottom end of said upper opening portion of said body cover (23), and integrally provided in the vicinity of a curved portion of a main frame (5) including said downtube (3) and a seat tube (4) curved to project obliquely rearward up from the bottom end of said downtube (3);
an engaging member (35) integrally provided at the bottom end of said battery case (25); and
an engaging-disengaging mechanism (42) for removably connecting the upper end portion of said battery case (25) to said downtube (3), in the vicinity of the top end of said downtube (3), characterized in that
an upper case portion (27) of the battery case (25) constitutes a part of the outside surface of the body of the motor-assisted bicycle (1).

2. Motor-assisted bicycle as claimed in claim 1, wherein said engaging-disengaging mechanism (42) has a locking means (38) provided on said downtube side and designed so that a pin (38a) will be withdrawably protruded by unlocking operation, and an engaging-disengaging pawl (42) which is releasably supported by a receiving portion on said downtube side and pivotally supported in the vicinity of the upper end of said battery case (25);
said engaging-disengaging pawl (42) locked on said receiving portion on said downtube side being released from said receiving portion on said downtube side by means of the pin (38a) which protrudes when unlocked by said locking means (38).

3. Motor-assisted bicycle as claimed in claim 1, wherein said engaging-disengaging mechanism (42) has a locking means (38) which is provided on said downtube side, and said pin (38a) which protrudes when unlocked by said locking means (38) retreats, and an engaging-disengaging portion (42b) which is capable of engaging with said pin (38a) of said locking means (38).

4. Motor-assisted bicycle as claimed in claim 1, wherein
said guide locking member (33) is composed of a guide piece (33c) directed obliquely upward toward the front from the vicinity of the curved portion of said main frame (5) and a locking piece (33e), bent to smoothly curve upward in a U-shape from the upper-edge base end portion of said guide piece (33c).

## Patentansprüche

1. Fahrrad mit Hilfsmotor, welches Energie von einem Motor, der mit elektrischer Energie von einer am Fahrzeug angebrachten Batterie (28) angetrieben wird, zur Muskelkraftunterstützung nutzt und welches eine Batterieanbringe-Entfernungsstruktur aufweist, umfassend:
eine Rumpfabdeckung (23), die so ausgebildet ist, daß sie ein schräg nach hinten und abwärts geneigtes Schrägrohr (3) außer dessen oberen Abschnitt umschließt;
ein Batteriegehäuse (25), das lösbar in den oberen offenen Abschnitt der Rumpfabdeckung (23) eingesetzt ist und die Außenform eines langen rechtwinkligen Rohrs aufweist;
ein Führungssperrelement (33), das nahe dem Bodenende des oberen offenen Abschnitts der Rumpfabdeckung (23) angeordnet ist und integral in der Nähe eines gekrümmten Abschnitts eines Hauptrahmens (5) vorgesehen ist, der das Schrägrohr (3) sowie ein Sitzrohr (4) umfaßt, das gekrümmt ist, um vom Bodenende des Schrägrohrs (3) schräg nach oben vorzustehen;
ein Eingriffselement (35), das integral am Bodenende des Batteriegehäuses (25) vorgesehen ist; und
einen Eingriffs-Trennmechanismus (42) zum lösbaren Verbinden des oberen Endabschnitts des Batteriegehäuses (25) mit dem Schrägrohr (3) in der Nähe des Oberendes des Schrägrohrs (3), dadurch gekennzeichnet, daß
ein oberer Gehäuseabschnitt (27) des Batteriegehäuses (25) einen Teil der Rumpfaußenfläche des Fahrrads mit Hilfsmotor (1) bildet.

2. Fahrrad mit Hilfsmotor nach Anspruch 1, wobei der Eingriff-Trennmechanismus (42) ein Sperrmittel (38) aufweist, das seitens des Schrägrohrs vorgesehen und derart ausgestaltet ist, daß ein Stift (38a) durch Entsperrbetätigung rückziehbar ausgefahren wird, sowie eine Eingriffs-Trennklinke (42), die von einem schrägrohrseitigen Aufnahmeabschnitt lösbar gehalten und nahe dem Oberende des Batteriegehäuses (25) schwenkbar gelagert ist;
wobei die an dem schrägrohrseitigen Aufnahmeabschnitt gesperrte Eingriffs-Trennklinke (42) mittels des Stifts (38a), der beim Entsperren durch das Sperrmittel (38) ausgefahren wird, aus dem schrägrohrseitigen Aufnahmeabschnitt gelöst wird.

3. Fahrrad mit Hilfsmotor nach Anspruch 1, wobei der Eingriffs-Trennmechanismus (42) ein schrägrohrseitig vorgesehenes Sperrmittel (38) aufweist, und wobei der eingefahrene Stift (38a) bei Entsperrung durch das Sperrmittel (38) ausgefahren wird, sowie einen Eingriffs-Trennabschnitt (42b), der mit dem Stift (38a) des Sperrmittels (38) in Eingriff zu bringen ist.

4. Fahrrad mit Hilfsmotor nach Anspruch 1, wobei das Führungssperrelement (33) aus einem Führungsstück (33c), das von nahe dem gekrümmten Abschnitt des Hauptrahmens (5) schräg aufwärts nach vorne ausgerichtet ist, sowie einem Sperrstück (33e), das vom Unterrand des Basisendabschnitts des Führungsstücks (33c) glatt aufwärts gekrümmt U-förmig gebogen ist, zusammengesetzt ist.

## Revendications

1. Bicyclette à assistance par moteur, utilisant la puissance venant d'un moteur commandé par une puissance électrique venant d'une batterie (28) montée sur le véhicule afin de suppléer à la puissance humaine, et ayant une structure de montage-démontage de batterie comprenant :
un couvercle de corps (23) configuré de manière à enclore au moins la partie supérieure d'un tube inférieur (3) incliné obliquement vers l'arrière et vers le bas;
un réceptacle à batterie (25) monté de façon démontable dans la partie d'ouverture supérieure dudit couvercle de corps (23) et ayant la forme externe d'un long tube à section carrée;
un organe de verrouillage de guide (33) placé à proximité de l'extrémité inférieure de ladite partie d'ouverture supérieure dudit couvercle de corps (23) et réalisé d'un seul tenant à proximité d'une partie incurvée d'un châssis principal (5) comprenant ledit tube inférieur (3) et un tube de siège (4) incurvé de manière à se projeter obliquement vers l'arrière depuis l'extrémité inférieure dudit tube inférieur (3);
un organe de mise en prise (35) prévu d'un seul tenant sur l'extrémité inférieure dudit réceptacle de batterie (25); et
un mécanisme de mise en prise-hors de prise (42), conçu pour relier de façon démontable la partie d'extrémité supérieure dudit réceptacle de batterie (25) audit tube inférieur (3), à proximité de l'extrémité supérieure dudit tube inférieur (3), caractérisé en ce qu'une partie supérieure de réceptacle (27) du réceptacle de batterie (25) constitue une partie de la surface extérieure du corps de la bicyclette à assistance par moteur (1).

2. Bicyclette à assistance par moteur selon la revendication 1, dans laquelle ledit mécanisme à mise en prise-hors de prise (42) présente un moyen de verrouillage (38), prévu sur le côté dudit tube inférieur et conçu pour qu'une tige (38a) fasse saillie, d'une manière permettant une extraction, par une opération de déverrouillage, et un cliquet à mise en prise-mise hors de prise (42) supporté de façon démontable par une partie réceptrice prévue dudit côté de tube inférieur et supporté de façon pivotante à proximité de l'extrémité supérieure dudit réceptacle de batterie (25);
ledit cliquet de mise en prise-mise hors de prise (42), verrouillé sur ladite partie réceptrice se trouvant sur ledit côté de tube inférieur, étant libéré de ladite partie réceptrice se trouvant dudit côté de tube inférieur, au moyen de la tige (33a) faisant saillie, lorsqu'elle déverrouillée par ledit moyen de verrouillage (38).

3. Bicyclette à assistance par moteur selon la revendication 1, dans laquelle ledit mécanisme de mise en prise-mise hors de prise (42) comporte un moyen de verrouillage (38) prévu sur ledit côté de tube inférieur et ladite tige (38a), faisant saillie une fois déverrouillée par ledit moyen de verrouillage (38), se rétractant, et une partie de mise en prise-mise hors de prise (426) étant susceptible de venir en prise avec ladite tige (38a) dudit moyen de verrouillage (38).

4. Bicyclette à assistance par moteur selon la revendication, dans laquelle ledit organe de verrouillage de guide (33) est composé d'une pièce de guidage (33c) dirigée obliquement vers le haut, en direction de l'avant depuis la proximité de la partie incurvée dudit châssis (5) , et une pièce de verrouillage (33a) pliée de façon à s'incurver en douceur vers le haut en prenant une forme en U, en partant de la partie d'extrémité de base de bord supérieure de ladite pièce de guidage (33c).
